# EUROPEAN PATENT SPECIFICATION

(11) **EP 0 742 113 B1**
(45) Date of publication and mention of the grant of the patent: **31.10.2001**
(21) Application number: 96201285.2
(22) Date of filing: 10.05.1996
(51) Int. Cl.: B60G 11/46, B60G 11/28, B62D 61/12, F16F 9/05

(54) **Bellows, as well as air suspension system and axle lift system**
Faltenbalg sowie Luftfeder-Aufhängungssystem und Achsanhebesystem
Soufflet ainsi que système de suspension pneumatique et système de soulevement d'essieu

(30) Priority: 11.05.1995 NL 1000342
(43) Date of publication of application: 13.11.1996
(60) Divisional application: 00201107.0
(73) Proprietor: WEWELER NEDERLAND B.V., 7300 AC Apeldoorn (NL)
(72) Inventor: Bramer, Hans, 6961 WR Eerbeek (NL)
(74) Representative: de Bruijn, Leendert C.

(56) References cited:
- EP-A- 0 284 572
- EP-A- 0 332 037
- EP-A- 0 431 673
- EP-A- 0 446 709
- EP-A- 0 554 573
- DE-A- 4 335 430
- FR-A- 1 251 884
- US-A- 3 063 703
- US-A- 5 058 916
- US-A- 5 058 917

## Description

The invention is related to an air suspension system for a road vehicle, comprising an axle having a trailing arm close to each end, which trailing arms are each mounted on a spring hanger which is attached to the chassis of the road vehicle, a bellows being provided between each trailing arm or the axle and the chassis, which bellows has a bellows rubber which is attached by means of a fixed fitting to either the trailing arm or the chassis, and interacts in a disengaging manner with the other of these by means of a fitting which forms an unsecured seating with the chassis or the trailing arm and which permits only the transmission of compressive forces.

An air suspension system of this type is disclosed in EP-A 554 573. The bellows rubber thereof is attached by a fixed fitting to the chassis of the road vehicle. A cone is provided on the trailing arm, which cone interacts in a disengaging fashion with a free fitting at the other end of the bellows rubber. As a consequence of this interaction between the cone and the free fitting, the bellows rubber of the bellows cannot be subjected to tensile force, even when the distance between trailing arm and chassis becomes relatively large. In practice, such a large distance usually occurs when lifting the vehicle in connection with placing it on a rail vehicle or boat.

When the vehicle is set down, the cone moves towards the free fitting and the free fitting has to come to rest again in the correct position on the cone. In order to obtain this interaction between these parts, the free fitting has to be held in a certain position. However, as the free fitting is attached to the supple bellows rubber, it has no clearly defined position as soon as the cone has disengaged from said fitting. There is therefore a certain risk that the bellows will not function properly after the vehicle has been set down.

In the case of the known air suspension system it would be possible for the free fitting to be held in a certain position by the rigidity of the bellows rubber. The problem, however, is that in practice it is not always possible to guarantee the same position at all times.

In the case of multiple-axle vehicles, such as trailers, the problem arises that the bellows rubbers of the various axles are not rolled in to the same degree if the trailer is tilting backwards. Furthermore, unevenness in the road can give rise to mutual differences in position of the bellows rubbers.

The aim of the invention is to provide an air suspension system which does not have these disadvantages. This aim is achieved in that the bellows rubber interacts, close to the seating, with positioning means for holding the bellows rubber in a predetermined position with respect to the chassis or the trailing arm.

According to an embodiment of the invention, the free fitting can interact with elastic positioning means.

The positioning means can be fixed to the spring hanger. However, fixing to the trailing arm or fixing to the fixed fitting of the bellows is also possible.

Preferably, the positioning means exert a pretensioning force on the bellows rubber in the direction of its compressed state. As soon as the internal pressure in the bellows rubber falls or becomes zero, for any reason whatsoever, said bellows rubber will be compressed under the influence of the pretensioning force exerted by the positioning means. As has already been mentioned above, the compressed position is clearly defined. Moreover, in this position it is always ensured that the bellows rubber rolls in in the correct manner, without forming folds.

Said positioning means can be constructed in various ways. According to a first possible embodiment, an auxiliary leaf spring is provided, the rigidity of which is appreciably less than that of the trailing arms, which auxiliary spring is fixed by one end to the free fitting and at the other end is fixed to another part of the system.

Fixing of the auxiliary spring to the chassis or spring hanger has the advantage that, when the road vehicle is in normal operation on the road, said auxiliary spring does not have to follow the suspension movements of the vehicle if the fixed fitting is also fixed to the chassis.

This advantage is also achieved in the case of an alternative embodiment, wherein both the auxiliary spring and the fixed fitting are fixed to the trailing arm.

According to a further possible embodiment, a helical spring is provided, one end of which is fixed to the free fitting of the bellows and the other end of which is fixed to the fixed fitting of the bellows.

According to a further alternative, the positioning means can comprise an essentially non-elastic auxiliary arm which at one end is fixed to the free fitting of the bellows and at the other end is pivotably mounted.

The invention will be explained in more detail below with reference to a few illustrative embodiments shown in the figures.

Figures 1 - 4 show a first illustrative embodiment of the air suspension system according to the invention, in various positions.

Figures 5 - 7 show, respectively, second, third and fourth embodiments.

Figure 8 shows a fifth embodiment.

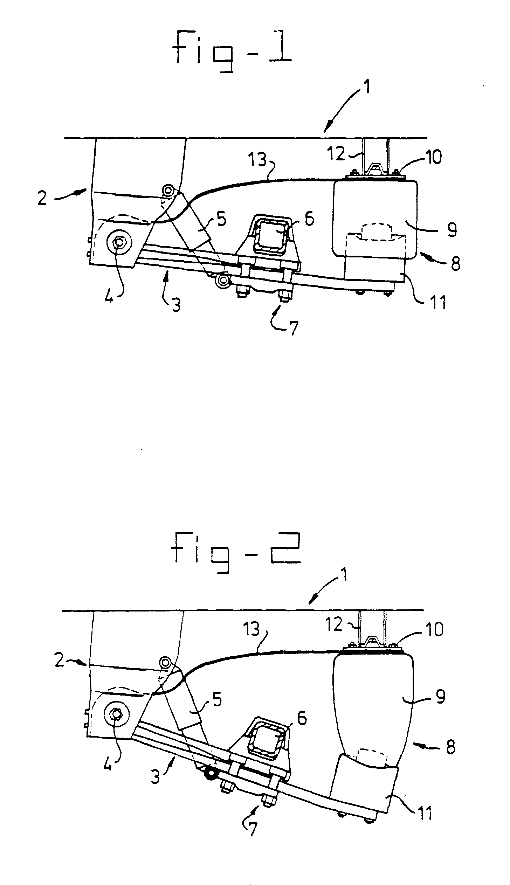

The air suspension system shown in Figures 1 - 4 comprises, in a known manner, two spring hangers 2, in each of which a trailing arm 3 is mounted such that it is pivotable about pivot 4. Furthermore, a shock damper 5 is provided between each trailing arm 3 and spring hanger 2. The axle 6 is fixed to the two trailing arms 3 by means of the fastening 7 with straps and strap plates, which is likewise known per se.

Furthermore, the trailing arms 3 are each resiliently supported with respect to the chassis 1 by a bellows 8. Said bellows 8 comprises a bellows rubber 9, which at the top is provided with a fitting 10 which bears against a seating with respect to the chassis 1. At its lower end, the bellows rubber 9 is attached to a fitting (bellows piston) 11, which is fixed to the relevant trailing arm 3. Said lower fitting 11 is, in a known manner, in the shape of a cylinder, over which the bellows rubber 9 can roll.

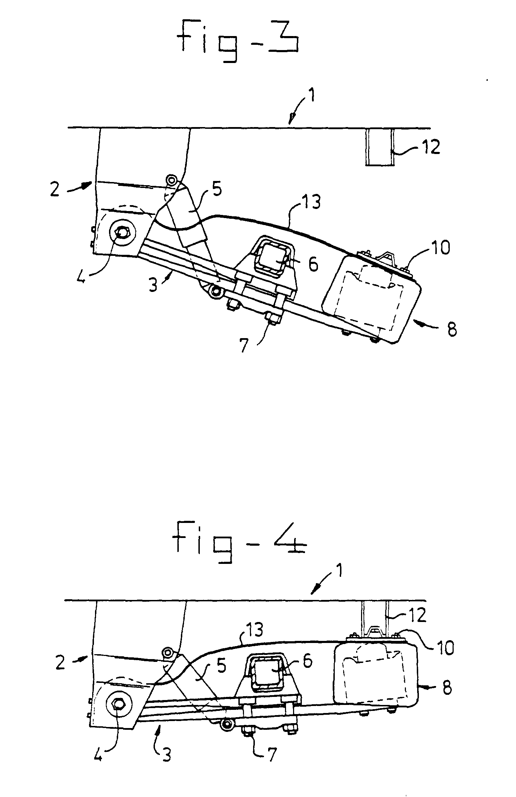

Although the bellows rubber 9 is completely rolled in in the position in Figure 3, it is nevertheless possible to obtain a well defined position if the bellows rubber 9 is partially rolled in.

As can be seen in Figure 3, the upper fitting 10 is free from the chassis 1, in particular free from the counterpart 12 fixed to the chassis 1. The advantage of this unsecured interaction between upper fitting 10 and counterpart 12 is that during lifting of the road vehicle, for example when loading it onto or unloading it from a rail vehicle, the bellows rubber 9 cannot be stretched when axle 6, with the wheels fixed thereto, drops downwards.

In order, in this position, to hold the bellows rubber 9 and the upper fitting 10 in a position such that the bellows 8 is again able to function in the correct manner when the road vehicle is set down again, an auxiliary leaf spring 13 is provided. Said auxiliary leaf spring 13 is fixed at one end to the relevant spring hanger 2 and at the other end to the upper fitting 10. Furthermore, the auxiliary leaf spring 13 is constructed such that it exerts a certain pretensioning force on the upper fitting 10 and continually presses the latter downwards in the direction towards the associated trailing arm 3. The consequence of this is that, when the internal pressure in the bellows 8 becomes low or zero, as is the case when the road vehicle is transported by boat or rail, the bellows rubber 9 is compressed in the indicated manner.

In this position it is always ensured that when the road vehicle is set down again, the fitting 10 again interacts in the correct manner with the counterpart 12.

Figure 2 shows the position in which the bellows 8 has reached its maximum stroke, for example in order to bring the loading floor of the road vehicle to the correct height in connection with loading or unloading thereof.

Figure 4 shows the minimum height of the bellows, likewise, for example, in connection with loading or unloading of the road vehicle.

As can be seen from Figures 1, 2 and 4, the auxiliary leaf spring used according to the invention is not exposed to the normal spring movements of the bellows 8 since, in the normal operating position of the road vehicle, it extends between two parts, that is to say spring hanger 2 and counterpart 12, which are fixed with respect to the chassis 1.

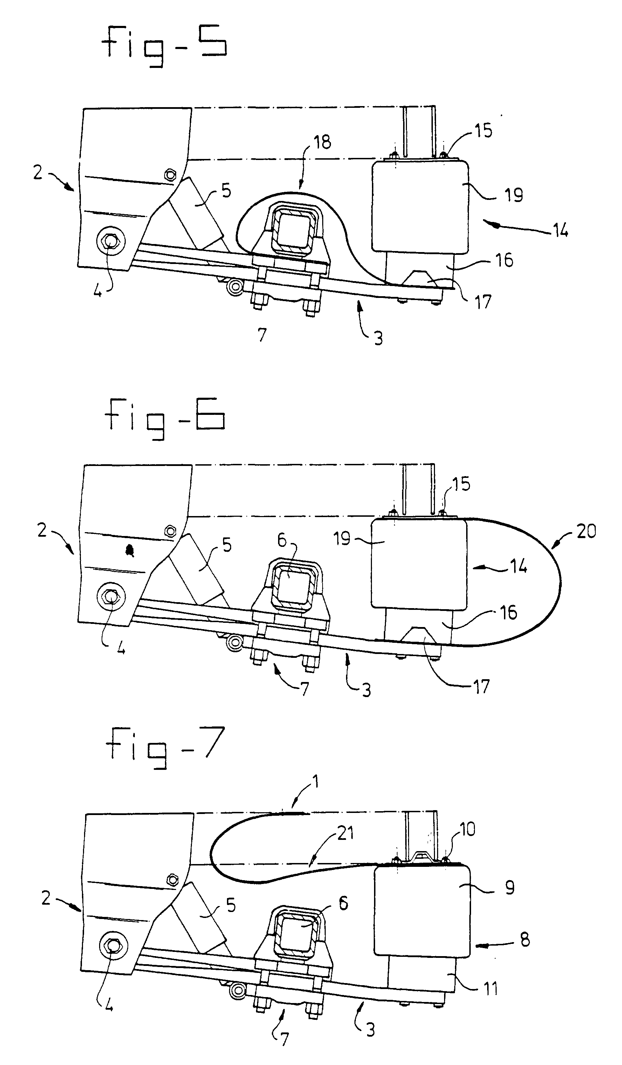

Figure 5 shows an embodiment in which the bellows 14 is permanently fixed to the chassis by means of the upper fitting 15 and interacts in an unsecured fashion with the trailing arm 3 by means of the lower fitting 16. The trailing arm 3 has a counterpart 17, which effects the interaction with the free fitting 16 of bellows 14. According to the invention, an auxiliary leaf spring 18 is now arranged between the trailing arm 3 and the lower, free fitting, which auxiliary leaf spring presses said lower, free fitting continually in the upward direction. With this embodiment, therefore, as soon as the pressure in bellows 14 has become sufficiently low or is zero the bellows rubber 19 will be pressed up on the lower, free fitting 16.

Figure 6 shows a variant of Figure 5, in which the auxiliary leaf spring 20 according to the invention is arranged between the fixed fitting 15 and the free fitting 16. In this embodiment also, the counterpart 17 is fixed to the trailing arm 3.

In the variant in Figure 7, which substantially corresponds to the embodiment according to Figures 1-4, the auxiliary leaf spring 21 according to the invention is fixed at one end to the chassis 1 and at the other end to the upper, free fitting 10 of the bellows 8.

The auxiliary leaf springs left and right can be coupled to one another.

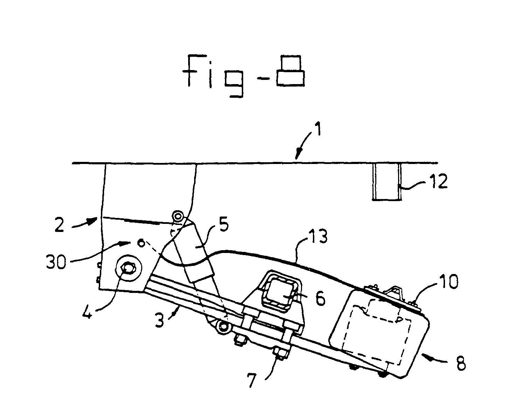

In the variant in Figure 8, the auxiliary leaf spring 13 is attached by means of a pivot pin 30 to the spring hanger 2.

## Claims

1. Air suspension system for a road vehicle, comprising an axle (6) having a trailing arm (3) close to each end, which trailing arms (3) are each mounted on a spring hanger (2) which is attached to the chassis (1) of the road vehicle, a bellows (8, 14) being provided between each trailing arm (3) or the axle (6) and the chassis (1), which bellows (8, 14) has a bellows rubber (9, 19) which is attached by means of a fixed fitting (11, 15) to either the trailing arm (3) or the chassis (1), and interacts in a disengaging manner with the other of these by means of a fitting (10) which forms an unsecured seating with the chassis (1) or the trailing arm (3) and which permits only the transmission of compressive forces, **characterized in that** the bellows rubber (9, 19) interacts, close to the seating, with positioning means (13, 18, 20, 21) for holding the bellows rubber (9, 19) in a predetermined position with respect to the chassis (1) or the trailing arm (3).

2. Air suspension system according to claim 1, wherein the seating comprises a free fitting (10, 16) attached to the bellows rubber (9, 19), as well as a counterpart (12, 17) attached to chassis (1) or trailing arm (3), which free fitting (10, 16) and counterpart (12, 17) can be held pressed against one another when the road vehicle is in normal operation, and the free fitting (10, 16) interacts with the positioning means (13, 18, 20, 21).

3. Air suspension system according to claim 1 or 2, wherein the positioning means (13) are fixed to the spring hanger (2).

4. Air suspension system according to claim 1 or 2, wherein the positioning means (18, 20) are fixed to the trailing arm (3).

5. Air suspension system according to claim 1 or 2, wherein the positioning means (21) are fixed to the chassis (1).

6. Air suspension system according to claim 1 or 2, wherein the positioning means (20) are fixed to the fixed fitting (15) of the bellows (14).

7. Air suspension system according to any of the preceding claims, wherein the positioning means comprise an auxiliary spring (13, 18, 20, 21), the rigidity of which is greater than the resistance of the bellows rubber (9, 19) to rolling in, which auxiliary spring is fixed by one end to the free fitting (10, 16) and at the other end is fixed to another part of the system.

8. Air suspension system according to claim 7, comprising a spring hanger (2) with two parallel spring hanger plates located some distance apart, wherein the auxiliary spring (13) fits with slight play between said spring hanger plates to provide lateral support for said auxiliary spring.

9. Air suspension system according to claim 7 or 8, wherein the auxiliary spring is a leaf spring.

10. Air suspension system according to claim 7, 8 or 9, wherein the auxiliary spring has a pivot point located in the vicinity of the mounting for the trailing arm.

11. Air suspension system according to any of claims 1-10, wherein the positioning means comprise an essentially non-elastic auxiliary arm which at one end is fixed to the free fitting of the bellows and at the other end is pivotably mounted.

## Patentansprüche

1. Luftfederungssystem für ein Straßenfahrzeug, mit einer Achse (6), mit einem Längslenker (3) nahe an jedem Ende, welche Längslenker (3) jeweils an einem Federlager (2) befestigt sind, das an dem Chassis (1) des Straßenfahrzeuges angeordnet ist, wobei ein Faltenbalg (8, 14) zwischen jedem Längslenker (3) oder der Achse (6) und dem Chassis (1) vorgesehen ist, welcher Faltenbalg (8, 14) einen Faltenbalggummi (9, 19) aufweist, der durch ein festes Anschlussmittel (11, 15) entweder an dem Längslenker (3) oder dem Chassis (1) angeordnet ist und der in einer entkoppelnden Art und Weise mit dem jeweils anderen über ein Anschlussmittel (10) wechselwirkt, das einen ungesicherten Sitz mit dem Chassis (1) oder dem Längslenker (3) ausbildet und nur die Übertragung von Druckkräften erlaubt, **dadurch gekennzeichnet, dass** der Faltenbalggummi (9, 19) nahe an dem Sitz mit Positionierungsmitteln (13, 18, 20, 21) zum Halten des Faltenbalggummis (9, 19) in einer vorbestimmten Position bezüglich des Chassis (1) oder des Längslenkers (3) wechselwirkt.

2. Luftfederungssystem nach Anspruch 1, bei dem der Sitz ein freies Anschlussstück (10, 16) aufweist, das sowohl an dem Faltenbalggummi (9, 19) als auch an einem an dem Chassis (1) oder dem Längslenker (3) angeordneten Gegenstück (12, 17) angeordnet ist, welches freie Anschlussstück (10, 16) und das Gegenstück (12, 17) an das jeweils andere angepresst gehalten werden können, wenn das Straßenfahrzeug sich in normalem Betrieb befindet und das freie Anschlussstück (10, 16) wechselwirkt mit dem Positionierungsmittel (13, 18, 20, 21).

3. Luftfederungssystem nach Anspruch 1 oder 2, wobei die Positionierungsmittel (13) an dem Federlager (2) befestigt sind.

4. Luftfederungssystem nach Anspruch 1 oder 2, wobei die Positionierungsmittel (18, 20) an dem Längslenker (3) befestigt sind.

5. Luftfederungssystem nach Anspruch 1 oder 2, wobei die Positionierungsmittel (21) an dem Chassis (1) befestigt sind.

6. Luftfederungssystem nach Anspruch 1 oder 2, wobei die Positionierungsmittel (20) an dem festen Anschlussmittel (15) des Faltenbalges (14) befestigt sind.

7. Luftfederungssystem nach einem der voranstehenden Ansprüche, wobei die Positionierungsmittel eine Hilfsfeder (13, 18, 20, 21) aufweisen, deren Steifigkeit größer als der Widerstand des Faltenbalggummis (9, 19) gegen Einrollen ist, und die Hilfsfeder mit einem Ende an dem freien Anschlussstück (10, 16) und mit dem anderen Ende an einem anderen Teil des Systems befestigt ist.

8. Luftfederungssystem nach Anspruch 7, mit einem Federlager (2) mit zwei parallelen Federlagerplatten, die in einem Abstand voneinander angeordnet sind, wobei sich die Hilfsfeder (13) mit einem geringen Spiel zwischen die Federlagerplatten einpasst, um eine seitliche Abstützung für die Hilfsfeder bereitzustellen.

9. Luftfederungssystem nach Anspruch 7 oder 8, wobei die Hilfsfeder eine Blattfeder ist.

10. Luftfederungssystem nach Anspruch 7, 8 oder 9, wobei die Hilfsfeder einen Drehpunkt aufweist, der in der Nachbarschaft der Befestigung des Längslenkers angeordnet ist.

11. Luftfederungssystem nach einem der Ansprüche 1 bis 10, wobei das Positionierungsmittel einen im wesentlichen nicht elastischen Hilfsarm aufweist, der an einem Ende an dem freien Anschlussstück des Faltenbalges und an dem anderen Ende drehbar montiert ist.

## Revendications

1. Système de suspension pneumatique pour un véhicule routier, comportant un essieu (6) ayant un bras tiré (3) près de chaque extrémité, lesquels bras tirés (3) sont montés chacun sur un élément de suspension de ressort (2) qui est fixé sur le châssis (1) du véhicule routier, un soufflet (8, 14) étant prévu entre chaque bras tiré (3) ou l'essieu (6) et le châssis (1), lequel soufflet (8, 14) possède un caoutchouc de soufflet (9, 19) qui est fixé au moyen d'un raccord fixe (11, 15) sur le bras tiré (3) ou le châssis (1), et interagit de telle manière à se désengager avec l'autre de ceux-ci au moyen d'un raccord (10) qui forme un siège non fixé avec le châssis (1) ou le bras tiré (3) et qui permet seulement la transmission de forces de compression, **caractérisé en ce que** le caoutchouc de soufflet (9, 19) interagit, près du siège, avec des moyens de positionnement (13, 18, 20, 21) afin de maintenir le caoutchouc de soufflet (9, 19) dans une position prédéterminée par rapport au châssis (1) ou au bras tiré (3).

2. Système de suspension pneumatique selon la revendication 1, dans lequel le siège comprend un raccord libre (10, 16) fixé sur le caoutchouc de soufflet (9, 19), ainsi qu'une pièce opposée (12, 17) fixée sur le châssis (1) ou le bras tiré (3), le raccord libre (10, 16) et la pièce opposée (12, 17) pouvant être poussés l'un contre l'autre lorsque le véhicule routier est en position normale, et le raccord libre (10, 16) interagissant avec les moyens de positionnement (13, 18, 20, 21).

3. Système de suspension pneumatique selon la revendication 1 ou 2, dans lequel les moyens de positionnement (13) sont fixés sur l'élément de suspension de ressort (2).

4. Système de suspension pneumatique selon la revendication 1 ou 2, dans lequel les moyens de positionnement (18, 20) sont fixés sur le bras tiré (3).

5. Système de suspension pneumatique selon la revendication 1 ou 2, dans lequel les moyens de positionnement (21) sont fixés sur le châssis (1).

6. Système de suspension pneumatique selon la revendication 1 ou 2, dans lequel les moyens de positionnement (20) sont fixés sur le raccord fixe (15) du soufflet (14).

7. Système de suspension pneumatique selon l'une quelconque des revendications précédentes, dans lequel les moyens de positionnement comportent un ressort auxiliaire (13, 18, 20, 21), dont la rigidité est plus grande que la résistance du caoutchouc de soufflet (9, 19) à l'enroulement, lequel ressort auxiliaire est fixé par une extrémité sur le raccord libre (10, 16) et à l'autre extrémité est fixé sur une autre partie du système.

8. Système de suspension pneumatique selon la revendication 7, comportant un élément de suspension de ressort (2) avec deux plaques d'élément de suspension de ressort parallèles disposées à une certaine distance, le ressort auxiliaire (13) se montant avec un léger jeu entre lesdites plaques d'élément de suspension de ressort afin de procurer un support latéral pour ledit ressort auxiliaire.

9. Système de suspension pneumatique selon la revendication 7 ou 8, dans lequel le ressort auxiliaire est un ressort à lame.

10. Système de suspension pneumatique selon la revendication 7, 8 ou 9, dans lequel le ressort auxiliaire a un point de pivotement disposé au voisinage du support pour le bras tiré.

11. Système de suspension pneumatique selon l'une quelconque des revendications 1 à 10, dans lequel les moyens de positionnement comprennent un bras auxiliaire essentiellement non élastique qui est fixé à une extrémité sur le raccord libre du soufflet et est monté de façon pivotante à l'autre extrémité.
